# EUROPEAN PATENT SPECIFICATION

(11) **EP 3 327 262 B1**
(45) Date of publication and mention of the grant of the patent: **31.07.2019**
(21) Application number: 17186660.1
(22) Date of filing: 17.08.2017
(51) Int. Cl.: F01N 3/10, F01N 3/20, F01N 3/035, F01N 13/00, B01D 53/94, B01J 29/76

(54) **DEVICE FOR PURIFYING EXHAUST GAS**
ABGASREINIGUNGSVORRICHTUNG
DISPOSITIF DE PURIFICATION DE GAZ D'ÉCHAPPEMENT

(30) Priority: 28.11.2016 KR 20160159258
(43) Date of publication of application: 30.05.2018
(73) Proprietor: Hyundai Motor Company, Seoul 06797 (KR); Kia Motors Corporation, Seoul 06797 (KR)
(72) Inventor: LIM, Cheoul Beom, 18280 Gyeonggi-do (KR)
(74) Representative: Isarpatent

(56) References cited:
- DE-A1-102007 027 677
- DE-A1-102008 009 672
- DE-A1-102008 055 890
- FR-A1- 2 970 298
- US-A1- 2011 011 068
- US-A1- 2013 318 949

## Description

### BACKGROUND OF THE INVENTION

### Field of the Invention

The present invention relates to a device for purifying exhaust gas, and more particularly, to a device for purifying exhaust gas capable of reducing harmful materials in exhaust gas by using an LTA zeolite catalyst with improved high-temperature performance.

### Description of Related Art

In general, an exhaust system of an engine includes an exhaust gas post-processing device such as a diesel oxidation catalyst (DOC), a diesel particulate matter filter (DPF), a selective catalyst reduction (SCR), and a lean NOₓ trap (LNT) catalyst to reduce carbon monoxide (CO), hydrocarbons (HC), a particulate matter, nitrogen oxide (NOₓ), and the like which are pollutants contained in the exhaust gas.

The DOC may oxidize total hydrocarbon and carbon monoxide in the exhaust gas and oxidize nitrogen monoxide into nitrogen dioxide.

The DPF may collect a particulate material contained in the exhaust gas and purify the particulate material through a chemical conversion process.

Further, in the SCR, a reducing agent (urea) injected in a stream direction of the exhaust gas through an injector is converted into ammonia (NH₃) by the heat of the exhaust gas, and as a catalytic reaction of nitrogen oxide and ammonia in exhaust gas by the SCR catalyst, nitrogen oxide is reduced to nitrogen gas (N₂) and water (H₂O).

In addition, recently, as emissions regulations for the vehicle are enhanced, improvement in nitrogen oxide purification performance for the SCR system is required. Particularly, in a gasoline engine with an exhaust gas of high temperature, a technique for improving heat durability of the catalyst or improving nitrogen oxide purification purify efficiency due to low heat resistance characteristic of the SCR system is required. DE 10 2007 027677 A1 relates to an emission control system having a particle filter, a nitrogen oxide absorber unit and a catalyst for the catalytic reduction of nitrogen oxide. More particles are found in a volume element of exhaust gas upstream of filter, than that found in a volume element of the exhaust gas downstream the catalyst. US 2013/318949 A1 relates to an exhaust gas purifying system including a SCR catalyst which has a function of reducing NOx and absorbing NO2; an upstream catalyst which is provided at the upstream side of the SCR catalyst and has a three-way purification function; and an air-fuel ratio controller which controls the air-fuel ratio of the air-fuel mixture. DE 10 2008 009672 A1 relates to an SCR catalyst which combines an SCR active component and a hydrocarbon storage component in one component and to a catalyst arrangement which contains said SCR catalyst.

The information disclosed in this Background of the Invention section is only for enhancement of understanding of the general background of the invention and should not be taken as an acknowledgement or any form of suggestion that this information forms the prior art already known to a person skilled in the art.

### BRIEF SUMMARY

Various aspects of the present invention are directed to providing exhaust gas purification performance by improving the high-temperature performance of a SCR and a SGPF by applying an LTA zeolite catalyst to a SCR and a SGPF. The invention is defined by the appended claims.

A device for purifying exhaust gas is provided to purify exhaust gas in an engine, the device including: an exhaust line through which exhaust gas discharged from the engine passes; a warm-up catalytic converter (WCC) that is disposed in the exhaust line; and a catalyst device disposed in the rear of the warm-up catalytic converter configured for reducing nitrogen oxide of the exhaust gas passing through the warm-up catalytic converter, wherein the catalyst device includes an LTA zeolite catalyst.

The content of copper may be 0.5 wt% to 5 wt% with respect to the entire weight of the LTA zeolite catalyst.

The device may further include an under floor catalytic converter disposed in the rear of the catalyst device.

The warm-up catalytic converter or the under floor catalytic converter may include a three-way catalyst converting toxic materials including a carbon monoxide, a hydrocarbon, and a nitrogen oxide included in the exhaust gas into harmless substances by an oxidation and reduction reaction.

The catalyst device may include a selective catalyst reduction (SCR).

The catalyst device may include an SGPF (SCR on GPF) coated with a selective catalyst reduction (SCR) on a gasoline particulate filter (GPF).

According to the exemplary embodiment of the present invention, the LTA zeolite catalyst with improved high-temperature performance is applied the SCR or the SGPF, and thus it is possible to provide an environment that can increase the heat resistance of the catalyst in a gasoline engine, improve the nitrogen oxide purification performance, and improve fuel economy.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a diagram schematically illustrating a structure of a device for purifying exhaust gas according to an exemplary embodiment of the present invention.
FIG. 2 is a diagram schematically illustrating a structure of a device for purifying exhaust gas according to another exemplary embodiment of the present invention.
FIG. 3 is a graph illustrating a temperature profile when inspecting FTP mode of a gasoline engine.
FIG. 4 is a graph illustrating a NOₓ purification performance of the copper type LTA zeolite catalyst according to a mole ratio of copper and aluminum.
FIG. 5 is a graph illustrating a NOₓ purification performance after hydrothermal aging at 900°C for 24 hrs with respect to the copper type LTA zeolite catalyst having different mole ratios of copper and aluminum.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the contrary, the invention(s) is intended to cover not only the exemplary embodiments, but also various alternatives, modifications, equivalents and other embodiments, which may be included within the scope of the invention as defined by the appended claims.

A device for purifying exhaust gas according to an exemplary embodiment of the present invention may be applied to not only vehicles but also various devices which burn fossil fuels to obtain energy and emit gas generated in the process. In the present specification, it is exemplified that the device for purifying exhaust gas is applied to the vehicles, but it should not be interpreted that the device for purifying exhaust gas is applied to only the vehicles.

An engine for generating power is mounted on the vehicle. The engine converts chemical energy into mechanical energy by burning a mixture of fuel and air. The engine is connected to an intake manifold to receive air into a combustion chamber, and connected to an exhaust manifold to collect the exhaust gas generated in the combustion process in the exhaust manifold and discharge the collected exhaust gas to the outside of the vehicle. In the combustion chamber or the intake manifold, an injector is disposed to inject the fuel into the combustion chamber or the intake manifold.

The exhaust gas generated in the engine is discharged to the outside of the vehicle through the exhaust manifold. The exhaust device may include an exhaust pipe and an exhaust gas recirculation (EGR) device.

The exhaust pipe is connected to the exhaust manifold to discharge the exhaust gas to the outside of the vehicle.

The EGR device is mounted on the exhaust pipe and the exhaust gas discharged in the engine passes through the EGR device. Further, the EGR device is connected to the intake manifold to control a combustion temperature by mixing a part of the exhaust gas with the air. The combustion temperature may be adjusted by controlling of the on and off state of an EGR valve (not illustrated) provided in the EGR device. That is, an amount of the exhaust gas supplied to the intake manifold is adjusted by controlling an on and off state of the EGR valve.

The exhaust device may further include a particulate filter that is mounted on the exhaust pipe configured to collect a particulate material contained in the exhaust gas. The particulate filter may be a device for purifying exhaust gas according to the exemplary embodiment of the present invention for purifying a harmful material other than the particulate material contained in the exhaust gas.

Hereinafter, the device for purifying exhaust gas according to the exemplary embodiment of the present invention will be described in detail with reference to the
accompanying drawings.

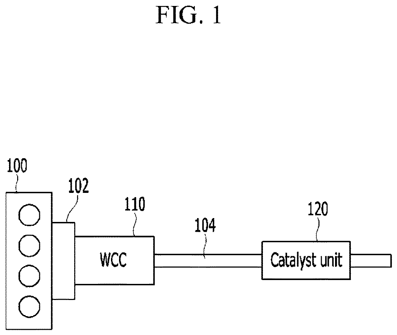

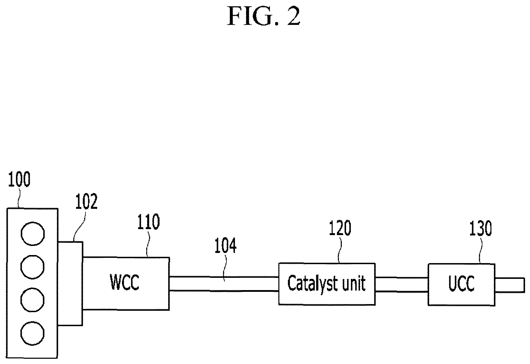

FIG. 1 is a diagram schematically illustrating a structure of a device for purifying exhaust gas according to an exemplary embodiment of the present invention, and FIG. 2 is a diagram schematically illustrating a structure of a device for purifying exhaust gas according to another exemplary embodiment of the present invention. In the present case, in the device for purifying exhaust gas, only schematic configurations required for description according to the exemplary embodiment of the present invention are illustrated, and the present invention is not limited to the configurations.

Referring to FIG. 1, the device for purifying exhaust gas according to an exemplary embodiment of the present invention is disposed on an exhaust line 104 which the exhaust gas passed through an exhaust manifold 102 of an engine 100 is expelled. The device for purifying exhaust gas according to various exemplary embodiments of the present invention includes warm-up catalytic converter (WCC) 110 disposed in the exhaust line 104 through which exhaust gas discharged from the engine 100 passes, and a catalyst device 120 disposed in rear of the warm-up catalytic converter 110.

The engine 100 configured to generate the driving torque by a combustion of fuel may include a gasoline engine, but the present invention is not limited thereto.

As shown in FIG. 2, the device for purifying exhaust gas according to an exemplary embodiment of the present invention may further include an under floor catalytic converter (UCC) 130 disposed in rear of the catalyst device 120.

The warm-up catalytic converter 110 may be directly connected with exhaust manifold 102, and the under floor catalytic converter 130 may be separated from an exhaust manifold 102 and configured on a vehicle floor in the exhaust line 104.

Herein, the warm-up catalytic converter 110 or the under floor catalytic converter 130 includes a three-way catalyst (TWC) converting toxic materials including a carbon monoxide, a hydrocarbon, and a nitrogen oxide included in the exhaust gas into harmless substances by an oxidation and reduction reaction.

The catalyst device 120 reduces the nitrogen oxide of the exhaust gas which passes through the warm-up catalytic converter 110.

For example, the catalyst device 120 includes a selective catalyst reduction (SCR) according to an exemplary embodiment of the present invention. The catalyst device 120 is configured to inject a reducing agent such as urea into an exhaust pipe, and reduce nitrogen oxide in the exhaust gas into nitrogen and oxygen.

The selective catalytic reduction catalyst may include a Passive SCR (pSCR) of using NH₃ exhausted from the LNT catalyst without a urea injection.

In addition, the catalyst device 120 may be a SGPF (SCR on GPF) coated with a selective catalyst reduction (SCR) on a gasoline particulate filter (GPF) according to another exemplary embodiment of the present invention.

The catalyst device 120 may include a LTA zeolite catalyst according to an exemplary embodiment of the present invention. In addition, the content of copper may be 0.5 wt% to 5 wt% with respect to the entire weight of the LTA zeolite catalyst. The content of copper may be 2 wt% to 3 wt% with respect to the entire weight of the LTA zeolite catalyst.

Hereinafter, a process of manufacturing the LTA zeolite catalyst according to the exemplary embodiment of the present invention will be described.

A method for manufacturing the catalyst according to an exemplary embodiment of the present invention includes preparing LTA zeolite having a Si/Al mole ratio of more than 1, preparing LTA zeolite containing ions by substituting ions in the LTA zeolite for ions, and preparing copper type LTA zeolite by performing copper (Cu) ion exchange of the LTA zeolite containing ions, and a mole ratio of copper and aluminum is 0.14 to 0.58. However, the present invention is not limited thereto and a mole ratio of active metal and aluminum may be adjusted according to a use environment of the catalyst.

First, the preparing of the LTA zeolite will be described. The LTA zeolite may be prepared by using a seed and also prepared without using the seed. A Si/Al mole ratio of the LTA zeolite prepared in the present process may be more than 1. More particularly, the Si/Al mole ratio is 5 to 50. The Si/Al mole ratio may be 5 to 30. The Si/Al mole ratio may be 8 or more.

As an example, the process of preparing the LTA zeolite by using the seed will be described.

To prepare the LTA zeolite, first, the LTA zeolite may be prepared by mixing an LTA seed with a mixture of aluminum hydroxide (Al(OH)₃) and tetraethyl orthosilicate (Si(OC₂H₅)₄).

Particularly, a first mixture is prepared by mixing a 1,2-dimethyl-3-(4-methylbenzyl)imidazolium hydroxide aqueous solution and aluminum hydroxide (Al(OH)₃) and performing primary stirring, and additionally mixing tetramethylammonium hydroxide pentahydrate and performing secondary stirring.

Herein, the first mixture may be prepared by mixing 20 wt% to 35 wt% of 1,2-dimethyl-3-(4-methylbenzyl)imidazolium hydroxide, 1 wt% to 2 wt% of aluminum hydroxide, 1 wt% to 5 wt% of tetramethylammonium hydroxide pentahydrate, and a residue amount of water with respect to a total weight of the first mixture, and the primary stirring and the secondary stirring may be performed for 0.5 hr to 1.5 hrs.

A second mixture is prepared by mixing tetraethyl orthosilicate (Si (OC₂H₅)₄; TEOS) with the prepared first mixture and performing tertiary stirring and then mixing a LTA seed and performing quaternary stirring.

The tetraethyl orthosilicate (TEOS) may be mixed with 30 wt% to 35 wt% with respect to a total weight of the second mixture may be mixed and the LTA seed may be mixed with 2 wt% to 6 wt% with respect to a total weight of all silicon ingredients included in the LTA zeolite.

Further, the tertiary stirring may be performed for 2 hrs to 4 hrs and the quaternary stirring may be performed for 20 hrs to 28 hrs.

Thereafter, a third mixture is prepared by sufficiently heating the second mixture to evaporate ethanol and water generated due to hydrolysis of tetraethyl orthosilicate (TEOS).

The heating of the second mixture may be performed at a temperature of 70°C to 90°C.

Thereafter, a fourth mixture is prepared by mixing a hydrogen fluoride (HF) aqueous solution with the third mixture and performing heating, washing, and drying processes.

Herein, the heating of the third mixture may be performed at a temperature of 150°C to 200°C for a predetermined time and the washing may be performed several times, and the drying may be performed at room temperature.

Next, the LTA zeolite for preparing the zeolite catalyst according to the exemplary embodiment of the present invention is prepared by performing additional heat treatment for removing an organic material of the fourth mixture.

The additional heat treatment may be performed at 500°C to 700°C for 6 hrs to 10 hrs and in the LTA zeolite according to the exemplary embodiment, the Si/Al mole ratio is 5 to 50.

Further, in the case of preparing the LTA zeolite without the seed, the LTA zeolite may be prepared by the following method. 0.0 mole to 0.2 mole of aluminum hydroxide and 0.0 mole to 0.2 mole of tetramethylammonium hydroxide (hereinafter, TMAOH) are added with 0.1 mole to 1.0 mole of 1,2-dimethyl-3-(4-methylbenzyl)imidazolium hydroxide (hereinafter, 12DM3 (4MB)IOH) as an organic structure-induced molecule and sufficiently stirred in a plastic beaker. Next, tetraethyl orthosilicate (hereinafter, TEOS) is added to have a ratio of 1 mole with respect to the reactants and sufficiently stirred again.

Next, the solution is sufficiently heated at 60°C to 100°C until water becomes 0 mole to 10 moles while completely removing ethanol generated due to the hydrolysis of TEOS added to the solution. Finally, 0.1 mole to 1.0 mole of hydrogen fluoride (HF) is added and sufficiently mixed to obtain a reaction mixture having a desired composition.

The reaction mixture is transferred to a Teflon reactor and put in a container made of stainless steel again, heated at 100°C to 200°C for 0.1 days to 14 days to prepare the LTA zeolite. Even in the LTA zeolite prepared by the method, the Si/Al mole ratio is 5 to 50. However, the preparing method is exemplified and is not limited by the aforementioned method.

Next, a process of preparing the LTA zeolite containing ions by using the prepared LTA zeolite will be described in detail.

First, the LTA zeolite is put into an ammonium salt, refluxed, washed, and dried to prepare an NH₄ type LTA zeolite containing NH₄ + ions.

Herein, the ammonium salt may be ammonium nitrate (NH₄NO₃).

The refluxing process may be performed at a temperature of 60 to 100°C for 5 hrs to 7 hrs.

In the exemplary embodiment, the ions exemplify ammonium ions, but are not limited thereto. That is, a use of other ions or ionic salts is also included in the range of the present invention.

Next, a process of preparing the copper type LTA zeolite by performing copper (Cu) ion exchange in the LTA zeolite containing ions will be described. In the copper type LTA zeolite prepared in the process, a mole ratio of copper and aluminum may be 0.14 to 0.58. The mole ratio is 0.32 to 0.48.

The mole ratio of copper and aluminum may be properly adjusted according to an environmental condition to use the catalyst.

Further, when the content of copper is represented by wt%, the content of copper may be 0.5 wt% to 5 wt%. Further, the content of copper may be 2.0 wt% to 3.0 wt%.

In the above process, copper type LTA zeolite containing Cu ions may be prepared through copper (Cu) ion exchange of NH₄ type LTA zeolite containing dried NH₄+ ions after preparing.

The copper ion exchange is put in a copper precursor solution such as copper acetate monohydrate, copper nitride, copper nitrate, and copper sulfate and stirring is performed, and then washing and drying processes are performed to prepare the copper type LTA zeolite.

Next, the copper type LTA zeolite may be heat-treated after gradually increasing the temperature in an oven to prepare the catalyst according to the exemplary embodiment of the present invention.

Herein, the heat treatment of the copper type LTA zeolite may be performed for 1 hr to 24 hrs after increasing the temperature up to 400°C to 750°C at 1°C/min to 30°C/min.

In the copper type LTA zeolite prepared in the process, a mole ratio of copper and aluminum may be 0.14 to 0.58. The mole ratio of copper and aluminum is, according to the invention, 0.32 to 0.48.

The mole ratio of copper and aluminum is a mole ratio having thermal stability and excellent NOₓ purification performance.

As a result, in the device for purifying exhaust gas according to the exemplary embodiment of the present invention, the Cu/LTA catalyst with improved high-temperature performance is applied the SCR or the SGPF, thereby increasing the heat resistance of the catalyst and improving the nitrogen oxide purification performance in a gasoline engine.

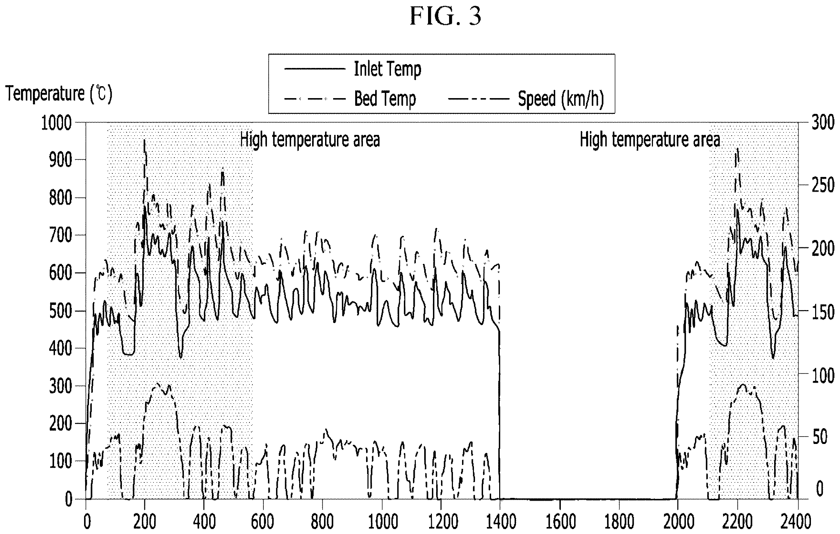

FIG. 3 is a graph illustrating a temperature profile when inspecting FTP mode of a gasoline engine.

Referring to FIG. 3, in a gasoline engine, high temperature operation region of 900° C to 1000° C or higher based on a catalyst bed temperature is exist. Therefore, to apply the SCR system to the gasoline engine, it is essential to secure the high temperature stability of the SCR catalyst.

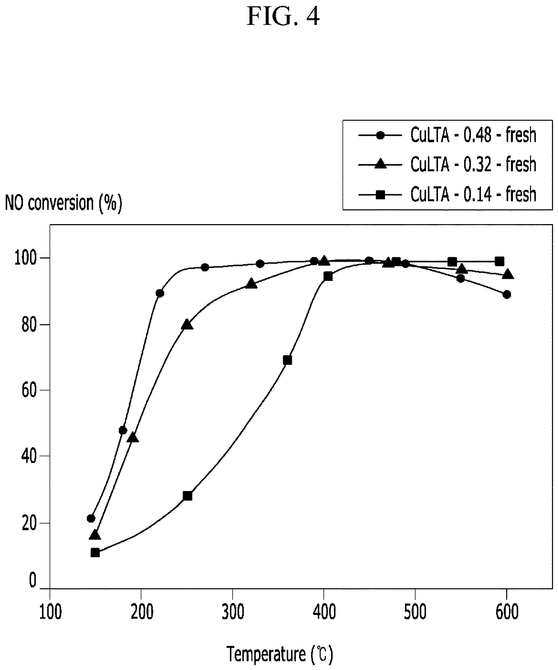

FIG. 4 is a graph illustrating a NOₓ purification performance of the copper type LTA zeolite catalyst according to a mole ratio of copper and aluminum.

Referring to FIG. 4, the NOₓ purification ratio is excellent in the temperature of 400°C or more when a mole ratio of copper and aluminum is 0.14 to 0.48. In addition, when a mole ratio of copper and aluminum is 0.32 to 0.48, the NOₓ purification ratio is excellent in the temperature of 200°C or more.

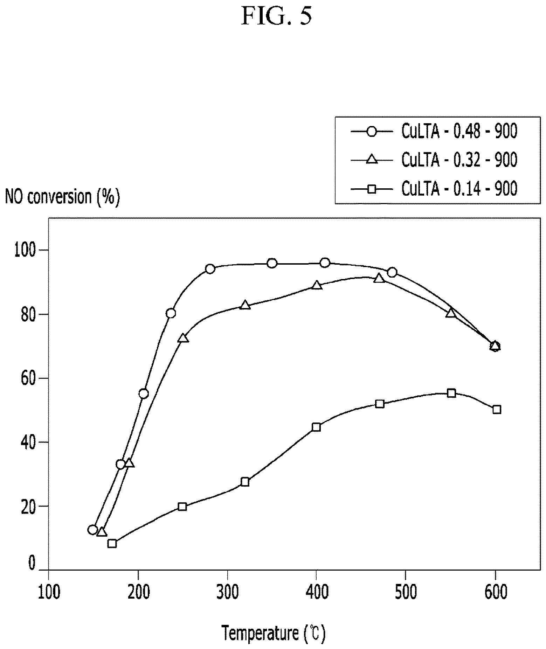

FIG. 5 is a graph illustrating a NOₓ purification performance after hydrothermal aging at 900°C for 24 hrs with respect to the copper type LTA zeolite catalyst having different mole ratios of copper and aluminum.

Referring to FIG. 5, a NOₓ purification performance after hydrothermal aging at 900°C for 24 hrs with respect to the copper type LTA zeolite catalyst having different mole ratios of copper and aluminum is illustrated. In addition, when a mole ratio of copper and aluminum is 0.32 to 0.48, NOₓ purification efficiency is 70% or more in reaction temperature range of 250°C to 600°C.

As such, in the device for purifying exhaust gas according to an exemplary embodiment of the present invention, the LTA zeolite catalyst with an improved high-temperature performance is applied the SCR or the SGPF, and thus it is possible to provide an environment that can increase heat resistance of the catalyst in the gasoline engine, improve the nitrogen oxide purification performance, and improve fuel economy.

For convenience in explanation and accurate definition in the appended claims, the terms "upper", "lower", "inner", "outer", "up", "down", "upwards", "downwards", "front", "rear", "back", "inside", "outside", "inwardly", "outwardly", "interior", "exterior", "forwards", and "backwards" are used to describe features of the exemplary embodiments with reference to the positions of such features as displayed in the figures.

The foregoing descriptions of specific exemplary embodiments of the present invention have been presented for purpose of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A device for purifying exhaust gas provided to purify the exhaust gas in an engine, the device comprising:
an exhaust line (104) through which the exhaust gas discharged from the engine (100) is configured to pass;
a warm-up catalytic converter (WCC, 110) that is disposed in the exhaust line; and
a catalyst device (120) disposed in a rear of the warm-up catalytic converter (110) for reducing a nitrogen oxide of the exhaust gas passing through the warm-up catalytic converter (110), wherein the catalyst device (120) includes an LTA zeolite catalyst,
**characterized in that**:
a mole ratio of silicon and aluminum of the LTA zeolite catalyst is 5 to 50,
the LTA zeolite catalyst is a copper type LTA zeolite including copper, and
a mole ratio of copper and aluminum in the LTA zeolite is 0.32 to 0.48.

2. The device of claim 1, wherein
a content of the copper is 0.5 wt% to 5 wt% with respect to an entire weight of the LTA zeolite catalyst.

3. The device of claim 2, further comprising:
an under floor catalytic converter (130) disposed in a rear of the catalyst unit (120).

4. The device of claim 3, wherein
the warm-up catalytic converter (110) or the under floor catalytic converter (130) includes
a three-way catalyst converting toxic materials including a carbon monoxide, a hydrocarbon, and a nitrogen oxide included in the exhaust gas into harmless substances by an oxidation/reduction reaction.

5. The device of claim 1, wherein
the catalyst device (120) includes a selective catalyst reduction (SCR).

6. The device of claim 1, wherein
the catalyst device (120) includes an SGPF (SCR on GPF) coated with a selective catalyst reduction (SCR) on a gasoline particulate filter (GPF).

## Patentansprüche

1. Vorrichtung zur Abgasreinigung, die bereitgestellt wird, um das Abgas in einem Motor zu reinigen, wobei die Vorrichtung Folgendes umfasst:
eine Abgasleitung (104), die derart ausgelegt ist, dass das Abgas hindurchströmt, das vom Motor (100) abgegeben wird;
einen Aufwärmkatalysator (WCC, 110), der in der Abgasleitung angeordnet ist; und
eine Katalysatorvorrichtung (120), die dem Aufwärmkatalysator (110) nachgeschaltet ist, um Stickoxide des Abgases zu reduzieren, das durch den Aufwärmkatalysator strömt (110), wobei die Katalysatorvorrichtung (120) einen LTA-Zeolith-Katalysator umfasst,
**dadurch gekennzeichnet, dass**:
das Molverhältnis von Silicium zu Aluminium des LTA-Zeolith-Katalysators 5 bis 50 beträgt,
der LTA-Zeolith-Katalysator ein LTA-Zeolith vom Kupfertyp ist, das Kupfer enthält; und
das Molverhältnis von Kupfer zu Aluminium in dem LTA-Zeolith 0,32 bis 0,48 beträgt.

2. Vorrichtung nach Anspruch 1, wobei
der Gehalt an Kupfer 0,5 Gew.-% bis 5 Gew-% beträgt, bezogen auf das Gesamtgewicht des LTA-Zeolith-Katalysators.

3. Vorrichtung nach Anspruch 2, des weiterhin umfassend:
einen Unterboden-Katalysator (130), welcher der Katalysatoreinheit (120) nachgeschaltet ist.

4. Vorrichtung nach Anspruch 3, wobei
der Aufwärmkatalysator (110) oder der Unterboden-Katalysator (130) Folgendes umfasst:
einen Drei-Wege-Katalysator, der toxische Stoffe einschließlich Kohlenmonoxid, Kohlenwasserstoffen und Stickoxiden, die in dem Abgas enthalten sind, mittels einer Redoxreaktion in unschädliche Substanzen umzuwandelt.

5. Vorrichtung nach Anspruch 1, wobei
die Katalysatorvorrichtung (120) ein selektives katalytisches Reduktionsorgan (SCR) umfasst.

6. Vorrichtung nach Anspruch 1, wobei
die Katalysatorvorrichtung (120) einen SGPF (SCR auf GPF) umfasst, wobei das selektive katalytische Reduktionsorgan (SCR) schichtförmig auf einen Ottopartikelfilter (GPF) aufgebracht ist.

## Revendications

1. Dispositif de purification de gaz d'échappement prévu pour purifier les gaz d'échappement dans un moteur, le dispositif comprenant :
une conduite d'échappement (104) à travers laquelle les gaz d'échappement déchargés du moteur (100) sont configurés pour passer ;
un convertisseur catalytique d'échauffement (WCC, 110) qui est disposé dans la conduite d'échappement ; et
un dispositif catalyseur (120) disposé à l'arrière du convertisseur catalytique d'échauffement (110) pour réduire un oxyde d'azote des gaz d'échappement passant à travers le convertisseur catalytique d'échauffement (110), le dispositif catalyseur (120) comprenant un catalyseur zéolite LTA,
**caractérisé en ce que** :
un rapport molaire du silicium et de l'aluminium du catalyseur zéolite LTA est de 5 à 50,
le catalyseur zéolite LTA est une zéolite LTA de type cuivre incluant du cuivre et
un rapport molaire du cuivre et de l'aluminium dans la zéolite LTA est de 0,32 à 0,48.

2. Dispositif selon la revendication 1, dans lequel une teneur en cuivre est de 0,5 % en poids à 5 % en poids par rapport au poids total du catalyseur zéolite LTA.

3. Dispositif selon la revendication 2, comprenant en outre :
un convertisseur catalytique sous plancher (130) disposé à l'arrière de l'unité catalytique (120).

4. Dispositif selon la revendication 3, dans lequel le convertisseur catalytique d'échauffement (110) ou le convertisseur catalytique sous plancher (130) comprend : un catalyseur à trois voies convertissant des matières toxiques, y compris un monoxyde de carbone, un hydrocarbure et un oxyde d'azote, incluses dans les gaz d'échappement en substances inoffensives par une réaction d'oxydation/réduction.

5. Dispositif selon la revendication 1, dans lequel le dispositif catalyseur (120) comprend une réduction catalytique sélective (SCR).

6. Dispositif selon la revendication 1, dans lequel le dispositif catalyseur (120) comprend un SGPF (SCR sur GPF) revêtu d'une réduction catalytique sélective (SCR) sur un filtre à particules d'essence (GPF).
